# EUROPEAN PATENT APPLICATION

(11) **EP 4 156 530 A1**
(43) Date of publication of application: **29.03.2023**
(21) Application number: 21199285.4
(22) Date of filing: 28.09.2021
(51) Int. Cl.: H04B 3/52

(54) **WIND FARM OFFSHORE COMMUNICATION SYSTEM**

(71) Applicant: Siemens Gamesa Renewable Energy A/S, 7330 Brande (DK)
(72) Inventor: Egedal, Per, 7400 Herning (DK); Nieuwenhuizen, John, 8700 Horsens (DK)
(74) Representative: SGRE-Association

(57) **Abstract**

A wind farm offshore communication system of a gas producing offshore wind farm (100) is provided. The offshore wind farm (100) comprises a pipe (70) to transfer gas produced at the offshore wind farm (100). The offshore communication system (20) comprises a communication unit (22) configured to transmit and/or receive an electrical communication signal; and a coupling device (21) coupled to the communication unit (22). The coupling device (21) is configured to receive the electrical communication signal from the communication unit (22) and to couple a corresponding electromagnetic wave into the pipe (70). A frequency of the electromagnetic wave is configured to allow the electromagnetic wave to propagate within the pipe (70). The coupling device (21) may be configured to intercept an electromagnetic wave propagating within the pipe (70) and to provide a corresponding electrical communication signal to the communication unit (22).

## Description

### FIELD OF THE INVENTION

The invention relates to a wind farm offshore communication system, to a wind farm onshore communication system, and to a respective communication method.

### BACKGROUND

The use of wind energy is proliferating. In view of the restricted space available for onshore wind turbines, offshore wind farms are being erected at a certain distance from shore. A conventional offshore wind farm generates electrical energy that is transferred to an onshore station located at an onshore site next to the sea. A subsea cable is often used to transport the electrical energy to the onshore station, where it is fed into the power grid. Electrical energy produced by an onshore wind farm is likewise transported and distributed via respective underground cables or overhead lines. To avoid the use of respective lines and cables and to be able to store the generated electrical energy, onsite hydrogen production has been proposed. Electrolysis may be used to produce hydrogen gas from electrical energy generated by the wind turbines of the wind farm, for example locally at each wind turbine or at a common hydrogen production site.

To operate an offshore wind farm, communication and control data is generally transmitted between the offshore wind farm and the onshore station. A fiber-optical cable can for example be used to provide a respective data connection. The optical fibers can be included in the sea cable with which the electrical power is transported to the onshore station. Fiber optical cables are however easily damaged in the harsh subsea environment, in particular if they need to be installed as a standalone cable. To avoid such negative effects, line-of-sight radio communication or satellite communication may be used. However, the former may have a limited range, whereas the latter may have a limited bandwidth and may be associated with high costs.

### SUMMARY

Accordingly, there is a need to mitigate at least some of the drawbacks mentioned above and to improve the communication for a wind farm, in particular for an offshore wind farm that produces a gas.

This need is met by the features of the independent claims. The dependent claims describe embodiments of the invention.

According to an embodiment of the invention, a wind farm offshore communication system of a gas producing offshore wind farm is provided. The offshore wind farm comprises a pipe to transfer gas produced at the offshore wind farm. The offshore communication system comprises a communication unit configured to transmit and/or receive a communication signal and a coupling device coupled to the communication unit. The coupling device is configured to receive an electrical communication signal from the communication unit and to couple a corresponding electromagnetic wave into the pipe. A frequency of the electromagnetic wave is configured to allow the electromagnetic wave to propagate within the pipe. Additionally or alternatively, the coupling device is configured to intercept an electromagnetic wave propagating within the pipe and to provide a corresponding electrical communication signal to the communication unit.

Such offshore communication system may allow the wind farm to communicate via the pipe, which may be a gas transport pipe and in particular a gas export pipe. Consequently, no additional communication cable for providing fiber-optical communication or the like may be necessary. The offshore communication system may in particular employ the pipe as a wave guide for transportation of the communication signal. The communication unit may receive via the coupling device the communication signal corresponding to the electromagnetic wave propagating in the pipe. The electromagnetic wave(s) (in particular electromagnetic radiation) propagating in the pipe may be radio-frequency (RF) waves (e.g. 100kHz to 5 Ghz). By avoiding the need for a fiber-optical cable to shore, the cost of the communication link between an onshore station and the offshore wind farm can be reduced. The use of a respective pipe for communication provides a robust solution that is significantly more robust than a single optical fiber in a cable over a length of 100 km or more. Furthermore, a respective pipe may provide a closed system, as such pipe is generally made of metal, in particular steel, so that the electromagnetic radiation does essentially not leave the pipe (the pipe acting similar to a Faraday cage). This may allow the use of all possible or desired radio-frequencies without the risk of violating a standard for radio communication.

According to a further embodiment of the invention, a wind farm onshore communication system of an onshore station is provided. The onshore station is configured to receive gas produced at a gas producing (offshore) wind farm via a pipe, wherein the onshore communication system comprises a communication unit configured to transmit and/or receive a communication signal; and a coupling device coupled to the communication unit. The coupling device is configured to receive an electrical communication signal from the communication unit and to couple a corresponding electromagnetic wave into the pipe, wherein a frequency of the electromagnetic wave is configured to allow the electromagnetic wave to propagate within the pipe and/or the coupling device is configured to intercept an electromagnetic wave propagating within the gas export pipe and to provide a corresponding electrical communication signal to the communication unit. Such onshore communication system may communicate with the offshore communication system via the respective pipe, so that similar advantages may be achieved.

The description below applies to either one and to both, to the offshore communication system and the onshore communication system, unless noted otherwise or unless clear from the context.

It should be noted that the gas that is produced at the wind farm (WF) may also be transported in liquid form within the pipe. The gas may for example be hydrogen, which is preferably transported as gas or super-critical fluid through the pipe.

The coupling device may be configured to transform the electrical communication signal into electromagnetic radiation, in particular radio waves, and vice versa. A frequency of the electrical communication signal may correspond to the frequency of the radiated or received electromagnetic wave. The frequency of the electrical communication signal and thus of the transmitted or received electromagnetic wave can include one or more frequencies, it may for example include several frequencies of a frequency band.

In a preferred configuration, the communication unit is configured to transmit and receive a communication signal, and the coupling device is configured to couple an electromagnetic wave into the pipe and to intercept an electromagnetic wave propagating within the pipe. The wind farm offshore/onshore communication system may thus provide two-way communication.

The communication unit may comprise a transmitter and a receiver, or may comprise a transceiver.

In an embodiment, the coupling device comprises at least one of an antenna and/or a resonator. The coupling device may for example comprise or may be a monopole antenna, e.g. a quarter-wave monopole antenna, or a dipole antenna. It should be clear that the shape of the antenna may be adapted in accordance with the size of the pipe, the frequency and/or the mode to be transmitted or received. Other coupling devices, such as high-power radio-frequency sources may also be used. However, it is beneficial to keep the radiating element of the coupling device that emits or intercepts electromagnetic radiation within the pipe simple and robust, in order to ensure a long lifetime in the potentially harsh gas environment.

The coupling device may further comprise a reflector, in particular an RF reflector, and/or an absorber, in particular an RF absorber, arranged behind an antenna of the coupling device (on a side opposite to the side facing the transmission direction). The damping of the RF signals may thereby be reduced and bandwidth may be improved.

The antenna may furthermore be configured based on a desired gain and/or directivity.

The pipe may comprise a manifold for collecting gas from plural wind turbines of the offshore wind farm. The coupling device may be configured to be installed downstream of the manifold in flow direction of the gas. This may improve the transmission and reception of the electromagnetic waves propagating within the pipe, and may in particular improve the signal strength. The presence of a plurality of branches within the pipe between the location of the coupling device at the offshore wind farm and the onshore station may thus be avoided. In some implementations, no branches or junctions may be present between the coupling device and a corresponding coupling device at an onshore station or at a different offshore wind farm, whereas other implementations may include one or more respective branches, for example for connecting three or more sites.

The pipe may attenuate an electromagnetic wave propagating within the pipe at one or more attenuating frequencies (the signal may be attenuated more at these than at other frequencies, in particular at neighboring frequencies). The frequency of the electromagnetic wave coupled by the coupling device into the pipe may be selected to avoid the one or more attenuating frequencies. The frequency(s) of the electromagnetic signal may accordingly be different from the attenuating frequencies or lie outside respective attenuating frequency ranges. The frequency or plural frequencies of the electromagnetic radiation coupled into the pipe may in particular be selected such that their attenuation is less than a medium attenuation level of electromagnetic radiation over a predefined frequency range. Signal quality, bandwidth and/or communication distance may thereby be improved.

The communication unit may be configured to automatically determine the frequency (e.g. frequency range) to be used for the electromagnetic wave. For example, the communication unit may be configured to perform a frequency scan (for example over a predefined frequency range) to determine the one or more attenuating frequencies of the pipe. It may further be configured to select the frequency of the electrical communication signal (and thus of the electromagnetic wave to be transmitted) to avoid the one or more determined attenuating frequencies, i.e. to be different from these attenuating frequencies. Again, it is noted that the frequency of the electromagnetic wave transmitted through the pipe can include plural frequencies, in particular a frequency range.

In an embodiment, the frequency of the electromagnetic wave radiated by the coupling device may comprise at least one first frequency and the communication unit may be configured to receive the communication signal corresponding to the electromagnetic wave intercepted by the coupling device at at least one second frequency. In some implementations, the at least one first frequency may be equal to at the least one second frequency. The communication unit may then either send or receive, it may for example employ time division multiplexing. In other implementations, the at least one first frequency may be different from the at least one second frequency. The communication unit may then be configured to simultaneously send and receive communication signals via the pipe, using the different first and second frequencies. It should be clear that a communication device present at another end of the pipe may be configured correspondingly, but may transmit at the one or more second frequencies and may receive at the one or more first frequencies.

The communication unit can accordingly be configured to perform half duplex communication, or may be configured to perform full duplex communication, in particular with another communication unit coupled via a respective coupling device to the pipe.

In an example, the at least one first frequency comprises plural frequencies in a first frequency band wherein the at least one second frequency comprises plural frequencies in a second frequency band. The first frequency band may be different from the second frequency band. A high bandwidth of a data communication may thereby be achieved, wherein transmission and reception may occur within the different frequency bands. Again, the first and/or second frequencies or frequency bands may be selected so as to avoid the above-mentioned attenuating frequencies.

For example, the communication unit may be configured to transmit data in several channels at first frequencies within the first frequency band and may be configured to receive data in several channels at second frequencies within the second frequency band.

In an embodiment, the offshore communication system may further comprise a communication connection between the communication unit and an offshore communication distribution unit at the offshore wind farm. The communication distribution unit may for example be configured to receive monitoring data from plural wind turbines of the wind farm and may distribute control commands to these plural wind turbines. The communication distribution unit may be provided at a predetermined wind turbine of the WF or at a control station of the WF. It may for example be a WF controller or SCADA controller.

The offshore communication distribution unit may for example be connected to a SCADA network of the offshore wind farm, wherein the SCADA network is configured to communicate with wind turbines of the offshore wind farm to provide control commands to the wind turbines and/or to receive monitoring data from the wind turbines. The SCADA network may form part of the communication system. The SCADA network may for example employ line-of-sight communication or fiber-optic communication for communicating with the wind turbines.

For an onshore communication system, the communication unit may be connected to a SCADA link or SCADA control station of the onshore station.

The communication connection may comprise a wireless communication device, wherein the communication unit is coupled to the wireless communication device (e.g. via a cable, or they may be integrated within the same device). The wireless communication device may be configured to communicate with a second wireless communication device at the communication distribution unit using wireless communication, such as according to a WLAN standard, i.e. an IEEE 802.11 standard, or other known wireless communication methods. No additional communication cable may thus need to be provided to the site at which the communication signal is coupled into the pipe. The communication connection may further comprise a floating device, on which the wireless communication device may be provided, in particular an antenna thereof. The wireless communication device, and/or the communication unit may be powered by solar power, using for example a respective solar panel on the floating device. No additional power connection to the coupling site may thus be required.

In another example, the communication connection may comprise a fiber communication device, wherein the communication unit is coupled to the fiber communication device, and wherein the fiber communication device is configured to communicate with a second fiber communication device at the communication distribution unit using optical fiber communication. A fast and high bandwidth data communication may accordingly be provided.

The communication unit may be powered by a photovoltaic cell. The photovoltaic cell may receive optical power from an optical fiber providing a data connection to an offshore communication distribution unit. A single optical cable may accordingly be used to power the communication unit and to provide data communication with the wind farm controller/SCADA system.

In other implementations, an electrical cable may be used for providing power and/or data communication between the communication unit and the offshore communication distribution unit, or the communication unit may be arranged at the location of such distribution unit.

The communication unit may be mounted to the pipe, may be provided in a floating device, may be arranged at an offshore communication distributing unit of the WF, or may be arranged at a wind turbine of the offshore wind farm. The first two examples keep the distance between the communication unit and the coupling device short, whereas the latter two examples facilitate the arrangement of the communication unit and the communication with a distribution unit. In the latter two examples, the communication connection may be a simple wired connection or the communication unit may be implemented directly in the WF controller or SCADA system.

The coupling device may be connected to the communication unit by a coaxial cable.

The coupling device may include an electrical feed-through through the pipe (in particular through a wall thereof) and an antenna in the pipe.

In an embodiment, the coupling device may comprise an enclosure mounted to the pipe and covering a wall portion of the pipe, the enclosure enclosing a cavity; an electrical feed-through between the cavity and an interior space of the pipe; an electrical connection leading through the feed-through; and an antenna arranged in the interior space of the pipe and electrically connected by the electrical connection. Such configuration may provide improved safety against leakage of gas or other fluid out of the pipe, since it provides an additional cavity around the feed-through through the pipe wall. Gas loss may thus be prevented efficiently, and safety in dangerous environments may be increased. The enclosure may in particular be a subsea enclosure or canister.

The coupling device may further comprise an electrical through connection from inside the cavity to the communication unit located outside the cavity, a first antenna inside the cavity and connected to the electrical through connection, and a second antenna inside the cavity and connected to the electrical feed-through. The first and second antennas may be configured to establish a communication connection by electromagnetic coupling (in particular, one antenna radiates while the other receives and vice versa to establish a wireless communication link). No cable connection to the feed-through through the wall of the pipe may thus be required, which further increases the safety with respect to gas leakage (e.g. by avoiding gas diffusion through cable insulation). Also an exchange of the first antenna inside the cavity is facilitated, which radiates the electrical communication signal received from the communication unit, so that an antenna upgrade can be performed quite easily. An opening of the pipe is in particular not necessary.

The configuration of the coupling device and/or the frequency of the electromagnetic wave may be selected to generate at least one of the following propagation modes of the electromagnetic wave in the pipe: A TE11 mode, a TM01 mode, a TE21 mode, a TE01 mode, a TM11 mode, a TE31 mode, and a TM21 mode. Preferably, the configuration is such that the mode is generated that has the lowest cut-off frequency for transmission through the pipe of the available modes. In general, this may be the TE11 mode, which may accordingly be the preferred mode. By making use of the mode having the lowest cutoff frequency, the communication distance may be increased, as the longer wavelength results in a larger propagation distance.

As an example, the wavelength of the electromagnetic wave coupled into the pipe may be selected to lie within a range of 2*a and 4*a, preferably 2.5*a and 3.5*a, wherein a is the inner radius of the pipe. By choosing such frequency, a single mode propagation of the TE11 mode at relatively low frequency may be achieved.

The pipe may be configured to have a radius between 0.2 and 2 m, in particular 0.3 and 1 m. The radius may for example be about 0.5 m. The pipe may be configured to transport the gas at a pressure between 1 and 200 bar, preferably between 30 bar and 200 bar.

The respective communication system may comprise the pipe.

According to a further embodiment of the invention, a wind farm communication system configured to provide communication for a gas producing offshore wind farm is provided. The offshore wind farm comprises a pipe to transfer gas produced at the offshore wind farm, wherein the wind farm communication system comprises at least one offshore communication system having any of the configurations described herein and being arranged at the offshore wind farm. It further comprises an onshore communication system having any of the configurations described herein and being arranged at an onshore station, the offshore wind farm being coupled to the onshore station via the pipe. Additionally or alternatively, it further comprises a second offshore communication system having any of the configurations described herein and being arranged at a second offshore wind farm. The offshore wind farm and the second offshore wind farm are coupled via the pipe. By such system, communication between the offshore wind farm and the onshore station or between two offshore wind farms can be established. It should be clear that further onshore stations and/or offshore wind farms may be added to the communication topology, so that a star topology or tree-like topology may be implemented using the communication system. A pipe network may for example include branches to connect different offshore wind farms and/or onshore stations, and the communication units at the offshore wind farms and/or onshore stations may transmit and receive communication signals in predefined frequency ranges, thus enabling communication over such pipe network.

According to a further embodiment, an offshore wind farm comprising plural offshore wind turbines is provided, wherein the offshore wind farm including the plural wind turbines is configured to produce a gas. The offshore wind farm further comprises a pipe coupling the offshore wind farm to an onshore station to transfer gas produced at the offshore wind farm to the onshore station, an offshore communication system at the offshore wind farm coupled to the pipe, and an onshore communication system at the onshore station coupled to the pipe. The wind farm may be configured to produce electrical power from wind energy and further to produce gas, in particular hydrogen gas, at wind turbines of the wind farm or at a central production station, wherein gas production preferably occurs by hydrolysis.

According to a further embodiment, a communication method for a gas producing offshore wind farm is provided, wherein the offshore wind farm comprises a pipe to transfer gas produced at the offshore wind farm. An offshore communication system of the offshore wind farm comprise a communication unit configured to transmit and/or receive a communication signal and a coupling device coupled to the communication unit. The method comprises receiving, by the coupling device, an electrical communication signal from the communication unit and coupling a corresponding electromagnetic wave into the pipe, wherein a frequency of the electromagnetic wave is selected to allow the electromagnetic wave to propagate within the pipe, and/or intercepting, by the coupling device, an electromagnetic wave propagating within the pipe and providing a corresponding electrical communication signal to the communication unit. By such method, advantages similar to the ones outlined further above may be achieved. The method may be performed by the offshore and/or onshore communication system having any of the configurations described herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind farm, an onshore station and a communication system according to an embodiment.
Fig. 2 is a schematic drawing showing an offshore communication system according to an embodiment.
Fig. 3 is a schematic drawing illustrating a time series of communication signals used in a communication system according to an embodiment.
Fig. 4 is a schematic drawing illustrating frequencies used in a communication system according to an embodiment.
Fig. 5 is a schematic drawing illustrating frequencies used in a communication system according to an embodiment.
Fig. 6 is a schematic drawing illustrating frequencies and transmission channels used in a communication system according to an embodiment.
Fig. 7 is a schematic drawing illustrating attenuating frequencies of a pipe used in a communication system according to an embodiment.
Fig. 8 is a schematic drawing illustrating the selection of frequencies for transmitting the communication signal in the pipe according to an embodiment.
Fig. 9 is a schematic drawing illustrating an exemplary implementation of a coupling device according to an embodiment.
Fig. 10 is a schematic drawing illustrating an exemplary implementation of a communication connection and a communication unit according to an embodiment.
Fig. 11 is a flow diagram illustrating a communication method according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

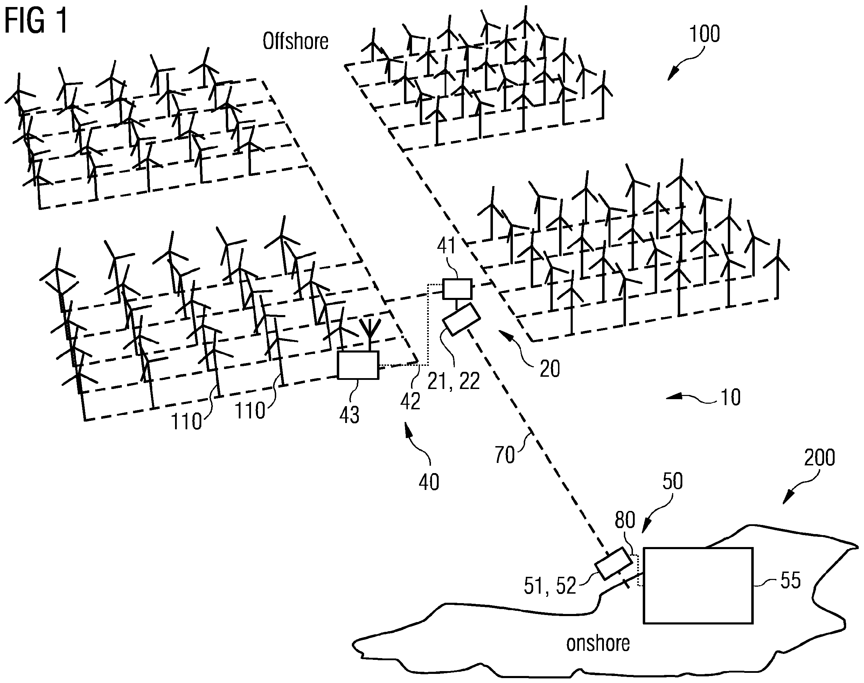

Fig. 1 schematically illustrates a wind farm 100 that includes plural wind turbines producing gas, in particular hydrogen gas. It further shows an onshore station 200 and a pipe 70, in particular a gas export pipe, that connects the wind farm 100 to the onshore station 200 to transport hydrogen produced at the offshore WF to the onshore station. As illustrated, the offshore WF 100 may include plural collection pipes that collect the gas from the different wind turbines and respective manifolds by which the pipes are aggregated into the single transport pipe 70. In operation, produced hydrogen is compressed to a pressure of between 30 and 200 bar and is transported via pipe 70 to onshore station 200. Pipe 70 may include a steel wall and may in particular have a configuration allowing the transport of hydrogen.

Fig. 1 further illustrates a communication system 10 according to an embodiment, which includes in the present example the wind farm offshore communication system 20 and the onshore communication system 50. Offshore communication system 20 includes a communication unit 22 and a coupling device 21 by means of which an electrical communication signal is coupled into the pipe 70 or received from pipe 70 for providing communication with the onshore station 200. It further includes a communication connection 40 between the communication unit 22 and an offshore communication distribution unit 43, which may be configured to distribute communication, such as control commands, to the wind turbines 110 of WF 100, and/or to receive monitoring signals from the wind turbines 110 of WF 100. Communication distribution unit 43 may in particular provide communication with the other wind turbines using for example a SCADA network, wherein such communication may occur via fiber-optic connections or by line-of-sight communication (using for example any known wireless communication standard). The offshore communication distribution unit 43 may be arranged at a wind turbine 110 of WF 100, or may be arranged on a dedicated offshore platform, for example a control platform, a hydrogen production and/or storage platform or the like. It should be clear that although the offshore WF 100 of Fig. 1 illustrates hydrogen production at each wind turbine 110, other topologies are conceivable, for example providing electrical energy produced at each wind turbine to a common hydrogen production platform.

For effecting communication with the communication unit 22, the communication connection 40 may comprise a further communication unit 41 establishing a data link 42 with the unit 43. For example, communication unit 41 may be implemented as a wireless transmitter/receiver and establish a wireless communication link with the unit 43, each of the units 41, 43 comprising a respective antenna. Such link may for example work according to any of the known WLAN or other wireless standards. In another example, communication unit 41 may be implemented as a fiber communication unit and data link 42 may include an optical fiber connection, wherein a further fiber communication unit is implemented in unit 43. Other implementations are conceivable. Communication units 22 and 41 may be separate units and may connected via a cable; however, it is preferred that both units are implemented in the same device. For example, they may be provided on a floating platform. A cable connection, such as a coaxial cable, may be used to connect the communication unit 22 to coupling device 21.

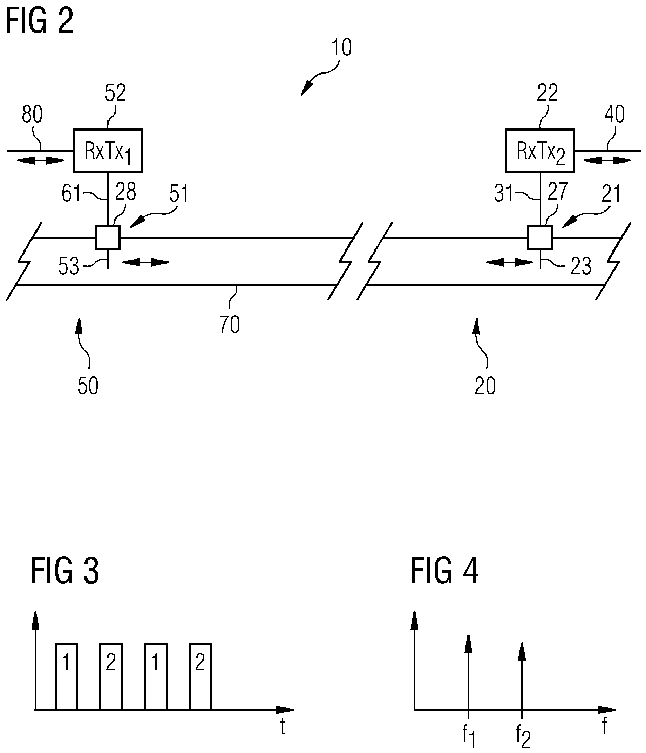

This is illustrated in more detail in the implementation of Fig. 2, which shows coupling device 21 being connected by coaxial cable 31 to communication unit 22. The coupling device 21 includes a feed-through 27 to lead the electrical connection into the pipe 70 and an antenna 23 arranged inside the pipe. As mentioned above, resonators or other devices capable of receiving and transmitting electromagnetic radiation, in particular in the radio-frequency range, may be used in place of antenna 23. Further, absorbers and/or reflectors may be provided behind antenna 23 (i.e. the direction opposite to the direction in which the coupling device 51 of the other communication system 50 is located).

Turning back to Fig. 1, the wind farm onshore communication system 50 likewise includes a coupling device 51 and a communication unit 52, which is for example connected to a SCADA communication link or controller 55 via a communication connection 80. Communication connection 80 can be configured similarly to communication connection 40; however, since the communication unit 52 is generally located onshore, a simple cable connection may be preferred, or communication unit 52 may directly be integrated in the SCADA system 55.

Onshore communication system 50 may be configured similarly to offshore communication system 20. In particular, the coupling device 51 may include an antenna 53 and an electrical feed-through 28, as shown in Fig. 2. The above outlined other possible implementations of coupling device 21 also apply to the coupling device 51. It may likewise be connected by a coaxial cable 61 to the communication unit 52. Communication units 22, 52 may each include a transmitter and a receiver, or a transceiver. Accordingly, the transceiver or transmitter can generate a respective electrical communication signal at a desired frequency (or range of frequencies), which is provided to coupling device 21, 51, which couples the communication signal into pipe 70, and in particular converts the electrical signal to electromagnetic radiation that propagates within the pipe 70.

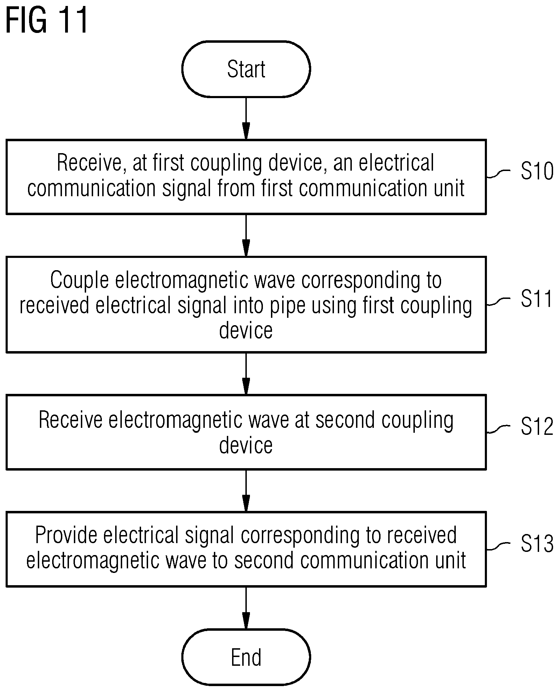

A flow diagram of a respective communication method is illustrated in Fig. 11. In step S10, at a first coupling device (e.g. 21), an electrical communication signal is received from the first communication unit 22, in particular via cable 31. In step S11, the coupling device 21 couples an electromagnetic wave (i.e. electromagnetic radiation) corresponding to the received electrical signal into pipe 70. The electromagnetic wave propagates within pipe 70 and is intercepted (or received) by the second coupling device 51 (step S12). By reception, it is transformed into an electrical signal that is, via cable 61, received at the second communication unit 52 (step S13). The communication system may likewise work the other way round, i.e. transmission of the radiation by coupling device 51 and reception by coupling device 21.

Without requiring an additional physical communication connection, for example via an optical fiber or electrical cable, communication between the offshore communication system 20 and the onshore communication system 50 is thus enabled. In particular, the onshore SCADA system 55 can communicate with the SCADA network connected to distribution unit 43 via the pipe 70, so respective monitoring and control data can be exchanged. In view of the robustness of pipe 70, such communication system provides improved robustness and is furthermore relatively simple and cost-efficient to implement. In particular, no subsea cable needs to be laid over several tens or even more than hundred kilometers.

Figs. 1 and 2 exemplarily illustrate the communication between an offshore WF 100 and an onshore station 200. It should however be clear that the respective communication may also be carried out between two offshore communication systems 20, for example between two offshore WFs coupled by a respective pipe. Plural WFs 100 may for example be connected in a start connection via pipes 70 and connected to one or more onshore stations 200. In such topology, each WF 100 may communicate with each of the other WFs 100 and with the onshore station 200 via the respective communication system 10, in particular by providing an offshore communication system 20 at each WF 100 and an onshore communication system 50 at each onshore station 200. Communication is likewise possible if several wind farms feed into the same pipe (corresponding to a serial connection of wind farms), wherein the wind farms may communicate directly with each other if the range of the electromagnetic radiation is long enough, or an intermediate wind farm may relay the communication.

The coupling device 21 of the offshore communication system 20 is preferably placed downstream (in the direction of gas flow) of the last manifold of wind farm 100, which may result in an improved quality of the transmitted signal, as the number of junctions it has to pass is reduced.

Turning back to Fig. 2, the communication unit 22 of the offshore communication system 20 may be arranged directly at a wind turbine 110 or a control/communication platform of the offshore WF 100, so that the coaxial cable 31 may extend to such wind turbine or control platform. In other implementations, unit 22 may be arranged on a floating platform, e.g. together with communication unit 41, or it may be mounted in a housing connected to pipe 70.

For effecting the communication explained above with respect to Figs. 2 and 11, communication unit 22 (and 52) may use the same frequency or frequencies for transmission and reception. Accordingly, as only one of the communication units 22, 52 can transmit at any time, a time division multiplexing scheme, as illustrated in Fig. 3, may be employed. Offshore communication unit 20 may transmit in time slots 1 and onshore communication unit 50 may transmit in time slots 2. Half duplex communication may thereby be enabled.

In another example, the offshore communication unit 20 may transmit at a first frequency f₁ and receive at a second frequency f₂ different from f₁. The onshore communication unit 50 may then transmit at frequency f₂ and receive at frequency f₁, as illustrated in Fig. 4. Using different frequencies for communication, a full duplex communication may be achieved in which both, onshore and offshore communication units may transmit and receive at the same time.

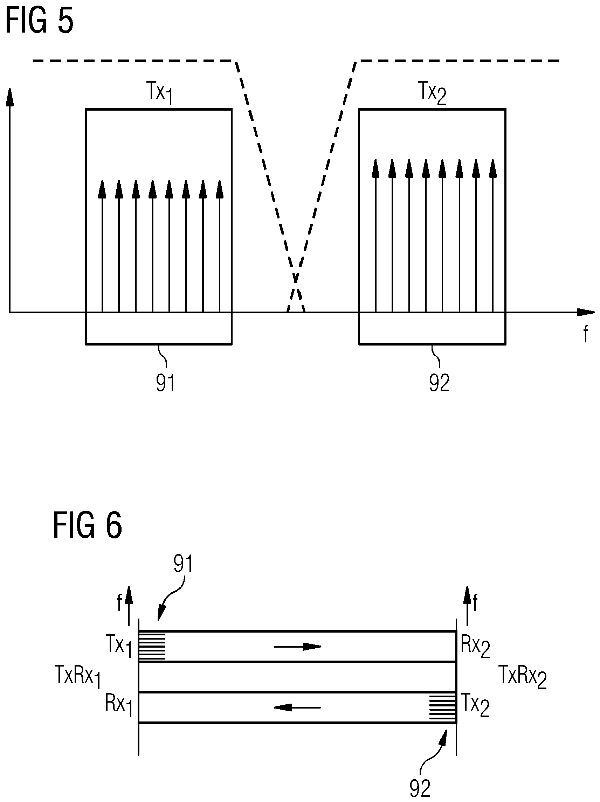

Another possible implementation is illustrated in Fig. 5, wherein the transmitter Tx1 at the WF offshore communication system 20 transmits at plural frequencies within a first frequency range 91 and the transmitter Tx2 at the onshore communication system 50 transmits at plural frequencies within a second frequency range 92. As shown in Fig. 6, the receiver of the respective communication system 20, 50 may then receive in the respective other frequency range. Receiver Rx1 of offshore communication system 20 receives in the second frequency range 92 whereas the receiver Rx2 at the onshore communication system 50 receives in the first frequency range 91. By using frequency ranges, multiple communication channels may thus be established, and the communication bandwidth may be increased. Furthermore, communication over extended ranges may be possible, since a smearing out of the frequencies when communicating over longer ranges may have only a reduced effect on the quality of communication (for example when using two or more frequencies for transmitting the same communication signal).

Although two frequency ranges 91, 92 are illustrated in Figs. 5 and 6, it should be clear that further frequency ranges may be employed, and that they may be narrower or wider, for example by using plural narrow frequency ranges alternatingly by the first and the second communication system 20, 50. It should be clear that the transmitter or transceiver at the respective communication unit 22, 52 generates a respective electrical communication signal, which is then converted into electromagnetic radiation at the respective frequency by the respective coupling device 21, 51. Further, although the description above and further below refers to an onshore communication system 50, it should be clear that two offshore communication systems 20 may communicate in a similar fashion. Furthermore, if more than two communication systems 20, 50 communicate, further frequency ranges may be employed to allow communication between each of these systems at the same time. A particular advantage is that the pipe 70 is a closed system, which essentially corresponds to a Faraday cage, so that electromagnetic radiation does hardly penetrate through the walls of the pipe. Accordingly, the frequency ranges can be chosen quite freely for communication, since the communication will not be in conflict with the existing standards for radio-communication.

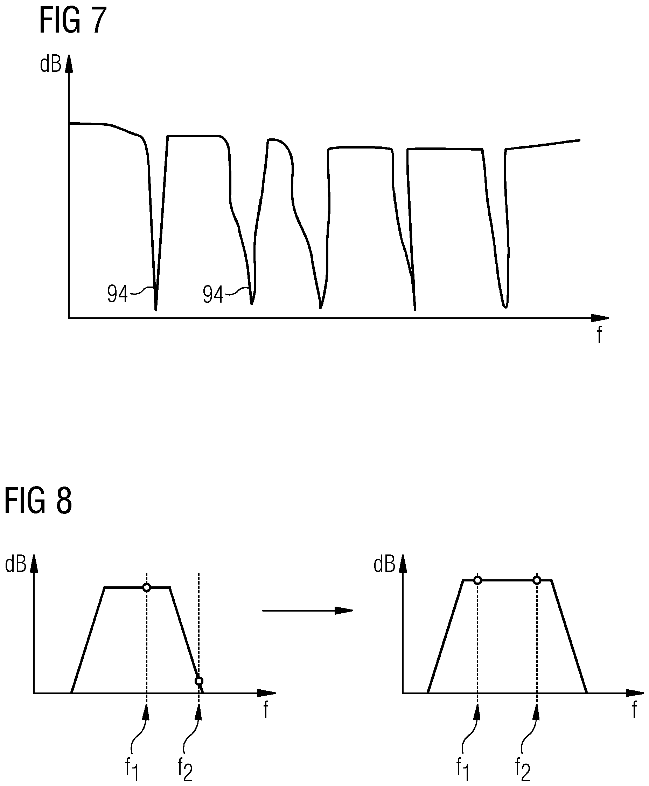

Pipe 70 may attenuate a propagating electromagnetic wave at certain frequencies, which is illustrated in Fig. 7. These attenuating frequencies 94, at which the propagating wave is damped more than at other frequencies, may depend on the geometry of the pipe and the particular configuration. The attenuating frequencies 94 further depend on the distance between the receiver and the transmitter (i.e. the length of the pipe therebetween). The frequencies 94 at which such higher attenuation occurs may be determined upfront, for example in a calibration procedure. In other implementations, one or more communication units 22, 52 may be configured to perform a frequency sweep (i.e. changing the transmitting frequency over a predetermined frequency range) to determine the transmission characteristic of the pipe 70 and in particular the location of attenuating frequencies 94. The respective other communication unit may for example measure the signal strength in dependence on the received frequency.

As illustrated in Fig. 8, the one or more frequencies used for communication by the communication system 20, 50 may be adjusted so as to avoid the attenuating frequencies 94, in particular so as to lie at frequencies different from the attenuating frequencies 94. The left-hand part of Fig. 8 illustrates a situation in which the first frequency f₁ lies in a range experiencing normal attenuation, whereas frequency f₂ lies at or close to an attenuating frequency. The communication unit 22, 52 is configured to adjust the frequency used for transmission such that it is shifted away from the attenuating frequency 94, i.e. such that is lies within a frequency range at which the radiation experiences normal attenuation in the pipe. The frequency may in particular be moved such that attenuation is minimal and that the amplitude at which the transmitted signal is received is maximized. The respective frequency tuning may occur in cooperation between the communication units 22, 52. Communication between the offshore communication system 20 and the onshore communication system 50 can thus be tuned and fine-tuned to achieve optimal signal transmission and bandwidth (or correspondingly, of two offshore communication systems 20).

Although Fig. 8 illustrates representative frequencies f₁, f₂, it should be clear that each of these may refer to a frequency band including plural transmission frequencies. The used frequency bands can thus efficiently be shifted out of the notches in the transmission spectrum at which high attenuation exists.

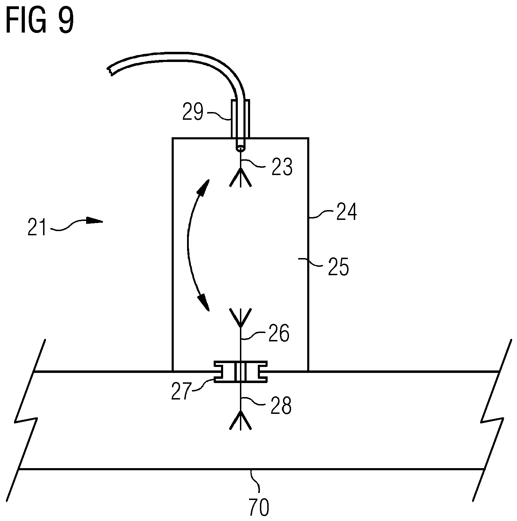

Fig. 9 schematically illustrates a further possible implementation of the coupling device 21. A housing 24, such as a subsea enclosure, is provided and attached to the pipe 70 and provides an inner cavity 25. The electrical connection to the communication unit 22 is fed into the cavity 25 via the electrical through connection 29. In cavity 25, it is connected to antenna 23. The electrical feed-through 27 has an antenna 26 connected at one side inside cavity 25 and a second antenna 28 connected inside pipe 70. In cavity 25, electromagnetic coupling takes place between antenna 23 and antenna 26, as illustrated by the arrow. The communication signal is then coupled into pipe 70 via antenna 28. Should a leakage exist via the electrical feed-through 27, the leaked gas will be collected in cavity 25. Increased safety may thus be achieved, for example in hazardous environments. In other implementations, an electrical connection may be provided between the electrical feed-through 27 and the electrical through connection 29 (i.e. antennas 23 and 26 may not be present). Such configurations likewise achieves an increase in safety, whereas the configuration of Fig. 9 additionally avoids that gas creeps through insulation of such electrical connection.

The electrical feed-through 27 of Figs. 2 and 9 may for example be implemented as a penetrator that is capable of withstanding a predefined pressure difference which may exist between the inside of pipe 70 and the outside, e.g. surrounding seawater or cavity 25.

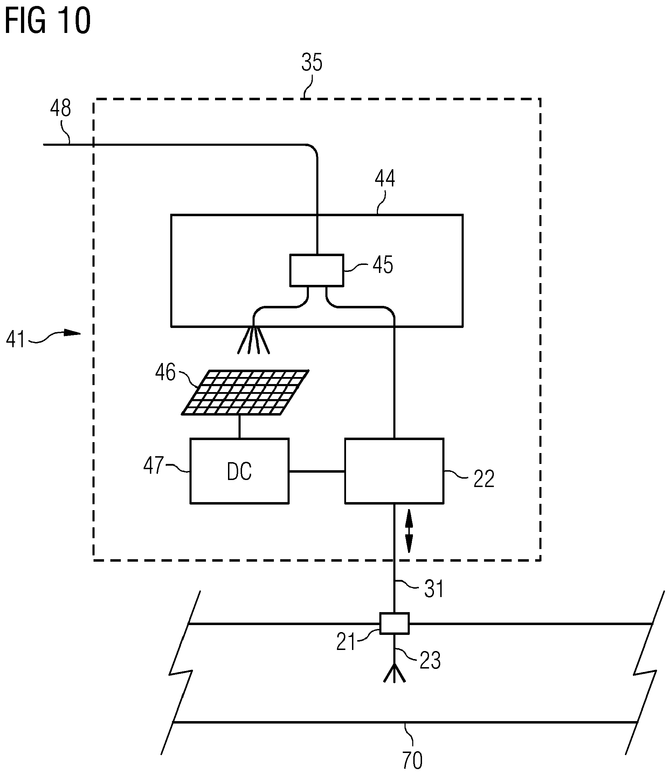

Fig. 10 illustrates a particular example in which the communication connection 40 employs optical fiber communication via the optical fiber 48. Optical fiber 48 may be used to transmit both, data communication and optical power. The communication unit 41 of the communication link 40 may for example include a fiber communication device 44. An optical transmitter/receiver 45 receives and/or transmits an optical communication signal via optical fiber 48 and provides a corresponding electrical communication signal to the communication unit 22. Furthermore, light at one or more wavelengths provided to supply power may be taken out of the optical fiber 48 and may be supplied to a photo cell 46, as illustrated in Fig. 10. Photo cell 46 provides respective electrical power for powering the communication unit 22. A converter 47 may be provided for converting the electrical power generated by photo cell 46 to the required voltage level. The optical communication unit 44 and the communication unit 22 may for example be provided on the same floating platform 35.

It is again noted that other configurations are conceivable, for example providing a wireless communication unit instead of optical communication unit 45 and providing an electrical power cable or solar panel for powering such wireless communication unit and the communication unit 22.

It should further be clear that each coupling device 21, 51 may include plural antennas, for example different receiving and transmitting antennas adapted to the respective frequency or frequency range. For transmission through pipe 70, a lower cutoff frequency generally exits. Preferably, the transmission mode is chosen that has the lowest cutoff frequency. This may for example be the TE11 mode. The frequency of transmission may for example lie within a range of 10 kHz to 5 GHz, preferably between 1 MHz and 2 GHz. For example, for a pipe of radius 0.5 m, the cutoff frequency for the TE11 mode may lie at about 176 MHz. Accordingly, a frequency above this cutoff frequency may be chosen. As indicated above, the frequency may be chosen so as to avoid the attenuating frequencies 94. In particular, the frequency may also be chosen such that only single mode propagation exists in the pipe within the respective frequency range. For the TE11 mode, single mode propagation may for example be achieved if the frequency is chosen such that the wavelength of the electromagnetic wave lies within a range of 2.6 a < λ < 3.4a, wherein a designates the pipe radius. The pipe may generally have a radius between about 0.3 m and 2 m.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A wind farm offshore communication system of a gas producing offshore wind farm (100), the offshore wind farm (100) comprising a pipe (70) to transfer gas produced at the offshore wind farm (100), wherein the offshore communication system (20) comprises:
- a communication unit (22) configured to transmit and/or receive an electrical communication signal; and
- a coupling device (21) coupled to the communication unit (22),
wherein the coupling device (21) is configured to receive the electrical communication signal from the communication unit (22) and to couple a corresponding electromagnetic wave into the pipe (70), wherein a frequency of the electromagnetic wave is configured to allow the electromagnetic wave to propagate within the pipe (70), and/or
wherein the coupling device (21) is configured to intercept an electromagnetic wave propagating within the pipe (70) and to provide a corresponding electrical communication signal to the communication unit (22).

2. The wind farm offshore communication system according to claim 1, wherein the coupling device (21) comprises at least one of an antenna (23, 28) and a resonator.

3. The wind farm offshore communication system according to claim 1 or 2, wherein the pipe (70) comprises a manifold for collecting gas from plural wind turbines (110) of the offshore wind farm (100), wherein the coupling device (21) is configured to be installed downstream of the manifold in flow direction of the gas.

4. The wind farm offshore communication system according to any of the preceding claims, wherein the pipe (70) attenuates an electromagnetic wave propagating within the pipe at one or more attenuating frequencies (94), wherein the frequency of the electromagnetic wave coupled by the coupling device (21) into the pipe (70) is selected to avoid said one or more attenuating frequencies (94).

5. The wind farm offshore communication system according to claim 4, wherein the communication unit (22) is configured to perform a frequency scan to determine the one or more attenuating frequencies (94) and is further configured to select the frequency of the electrical communication signal to avoid said one or more attenuating frequencies (94).

6. The wind farm offshore communication system according to any of the preceding claims, wherein the frequency of the electromagnetic wave radiated by the coupling device (21) comprises at least one first frequency (f₁, 91), and wherein the communication unit (22) is configured to receive a communication signal corresponding to the electromagnetic wave intercepted by the coupling device (21) at at least one second frequency (f₂, 92),
wherein the at least one first frequency is equal to the at least one second frequency, or wherein the at least one first frequency is different from the at least one second frequency.

7. The wind farm offshore communication system according to claim 6, wherein the at least one first frequency comprises plural frequencies in a first frequency band (91) and wherein the at least one second frequency comprises plural frequencies in a second frequency band (92), wherein the first frequency band is different from the second frequency band.

8. The wind farm offshore communication system according to any of the preceding claims, further comprising a communication connection (40) between the communication unit (22) and an offshore communication distribution unit (43) of the offshore wind farm (100).

9. The wind farm offshore communication system according to claim 8, wherein the communication connection (40) comprises a wireless communication device, wherein the communication unit (22) is coupled to the wireless communication device, and wherein the wireless communication device is configured to communicate with a second wireless communication device at the communication distribution unit (43) using wireless communication.

10. The wind farm offshore communication system according to claim 8, wherein the communication connection (40) comprises a fiber communication device (44), wherein the communication unit (22) is coupled to the fiber communication device (44), and wherein the fiber communication device (44) is configured to communicate with a second fiber communication device at the communication distribution unit (43) using optical fiber communication.

11. The wind farm offshore communication system according to any of the preceding claims, wherein the communication unit (22) is mounted to the pipe (70), is provided in a floating device (35), is arranged at an offshore communication distribution unit (43) of the offshore wind farm, or is arranged at a wind turbine (110) of the offshore wind farm.

12. The wind farm offshore communication system according to any of the preceding claims, wherein the coupling device (21) comprises:
- an enclosure (24) mounted to the pipe
(70) and covering a wall portion of the pipe, the enclosure enclosing a cavity (25);
- an electrical feed-through (27) between the cavity (25) and an interior space of the pipe (70);
- an electrical connection leading through the feedthrough (27); and
- an antenna (28) arranged in the interior space of the pipe (70) and electrically connected by the electrical connection.

13. A wind farm onshore communication system of an onshore station, the onshore station (200) being configured to receive gas produced at a gas producing wind farm (100) via a pipe (70), wherein the onshore communication system (50) comprises:
- a communication unit (52) configured to transmit and/or receive an electrical communication signal; and
- a coupling device (51) coupled to the communication unit (52),
wherein the coupling device (51) is configured to receive the electrical communication signal from the communication unit (52) and to couple a corresponding electromagnetic wave into the pipe (70), wherein a frequency of the electromagnetic wave is configured to allow the electromagnetic wave to propagate within the pipe, and/or
wherein the coupling device (51) is configured to intercept an electromagnetic wave propagating within the pipe (70) and to provide a corresponding electrical communication signal to the communication unit (52).

14. A wind farm communication system (10) configured to provide communication for a gas producing offshore wind farm (100), the offshore wind farm comprising a pipe (70) to transfer gas produced at the offshore wind farm (100), wherein the wind farm communication system (10) comprises at least one offshore communication system (20) according to any of claims 1-12 arranged at the offshore wind farm (100), and further comprises:
an onshore communication system (50) according to claim 13 arranged at an onshore station (200), the offshore wind farm (100) being coupled to the onshore station (200) via the pipe (70), and/or
a second offshore communication system (20) according to any of claims 1-12 arranged at a second offshore wind farm (100), wherein the offshore wind farm and the second offshore wind farm are coupled via the pipe (70).

15. A communication method for a gas producing offshore wind farm, the offshore wind farm (100) comprising a pipe (70) to transfer gas produced at the offshore wind farm (100), wherein an offshore communication system (20) of the offshore wind farm comprise a communication unit (22) configured to transmit and/or receive an electrical communication signal; and a coupling device (21) coupled to the communication unit (22), wherein the method comprises:
- receiving, by the coupling device (21), the electrical communication signal from the communication unit (22) and coupling a corresponding electromagnetic wave into the pipe (70), wherein a frequency of the electromagnetic wave is selected to allow the electromagnetic wave to propagate within the pipe, and/or
- intercepting, by the coupling device (21), an electromagnetic wave propagating within the pipe (70) and providing a corresponding electrical communication signal to the communication unit (22).
